# EUROPEAN PATENT APPLICATION

(11) **EP 3 975 398 A1**
(43) Date of publication of application: **30.03.2022**
(21) Application number: 20197835.0
(22) Date of filing: 23.09.2020
(51) Int. Cl.: H02K 15/095

(54) **NEEDLE WINDING MACHINE**

(71) Applicant: Nortech System SA, 6828 Balerna (CH)
(72) Inventor: RIVARA, Antonio, 6828 Balerna (CH)
(74) Representative: M. Zardi & Co S.A.

(57) **Abstract**

Needle winding machine comprising a winding head (1), a unit (3) for performing winding with a needle (2) which can be located at a predetermined vertical elevation relative to the head; a winding engine designed to provide the needle a fast winding movement respect to the unit, by means of a kinematic system comprising a wheel (31), a pin (35) mounted eccentrically on said wheel, the pin being engaged inside a slot (34) of a needle carriage (3), the kinematic system being configured so that the rotation of the wheel, as a result of the engagement between the eccentric pin and the slot, causes a vertical alternated movement of the needle carriage.

## Description

### Filed of application

The invention relates to the field of needle winding machines for electric motors.

### Prior art

Electric coil winding machines (winders) essentially comprise the flyer winding machines and the needle winding machines.

A needle winding machine comprises a conducting wire delivering component, called "needle", which performs a forwards and backwards alternated movement in an essentially vertical direction, to form the desired loops of the conducting wire around a core, for example around the poles of a stator.

The needle machine has the advantage of being able to operate in confined spaces. For example, a needle winding machine is practically indispensable for winding the coils of the so-called closed stators of the electric motors. A closed stator comprises an outer ring and poles extending from said ring towards the axis. The outer ring does not allow access to the wire from the outside. Therefore the only way to wind the wire around the poles is to introduce an axially arranged needle inside the stator from above or below.

Needle machines present several technological challenges that are not yet fully solved.

The winding process requires an elliptical movement of the needle relative to the core to alternately lay down the wire along the two sides of said core but unfortunately, such elliptical movement is complex to be obtained.

A further issue which cannot be easily solved regards the reversal of the vertical stroke of the needle, which moves between two end-of-stroke positions, i.e. a top end-of-stroke position and a bottom end-of-stroke position. The needle alternates between a downward stroke towards the bottom and an upward stroke towards the top and, once the top or bottom end-of-stroke position have been reached, it must reverse its motion. It is also necessary to consider the weight of the alternating masses integral with the needle (needle support, etc.) which opposes the upward stroke.

Currently, there is an increasingly growing demand on the market for coil winding machines capable of reaching high speeds. Reaching high speed winding is not a major issue for the "flyer" type winding machines in which the wire is delivered by a rotating member, however this is not the case for the "needle" type winding machines wherein the winding is entrusted to a moving member having an alternated movement. But as stated above, there are tasks where needle winding is necessary.

Additionally, the formation of the coils must be not only fast but as well precise. It is common knowledge that the accurate stratification of the conducting wire improves the density and the uniform distribution of the electromagnetic field and ensures better performance of the coil. For example, in an electric motor, increased torque at a parity of weight and size can be achieved.

Conventional technologies for moving the needle essentially comprise servo-assisted systems with recirculating-ball gear or toothed-belt drive or direct system with linear motors which, however, are not entirely satisfactory. In fact, known systems are complex and unsuitable to reach the winding speeds required. Some of the known systems, to achieve high coil winding speeds, require expensive and sophisticated electronic controls and/or the management of which can be complicated in a normal industrial environment.

Another issue that arises during the movement of the needle is due to the weight of the moving members performing an alternated movement, which produces an additional load during the vertical downward movement. Some systems use spring shock-absorbers to compensate for this additional load, although adding an additional degree of complication.

### Summary of the invention

The invention aims to overcome the limitations and drawbacks of the prior art which have been described above. The aim of the invention in particular is to improve the technology of the vertical stroke winding needle machines. One object of the invention is to provide an innovative kinematics for moving the needle and obtaining the desired elliptical winding movement. In particular, the invention proposes that the mechanism should be easily implementable, easy to be maintained and to be managed by averagely skilled personnel. Additionally, the mechanism should be able to reach high speeds and to operate having a high degree of precision regarding the stratification of the wire.

The objects are achieved with a coil winding machine according to the claims.

The machine comprises a winding unit which can be located at a preselected vertical height respect to a corresponding winding head, by means of a vertically translating support. The winding unit comprises a needle for delivering a conducting wire and a winding engine which is configured to give the needle a winding movement in relation to said support of the unit. Said winding movement is a vertical movement alternated between a top end-of-stroke elevation and a bottom end-of-stroke elevation.

The term "winding engine indicates the set of components that gives the needle the fast up and fast down movement to perform the coil winding operation. The winding engine essentially comprises a needle-carrying carriage having a vertical stroke; a pin having an eccentrical rotation over a motor axis; a kinematic system designed to convert the rotation of the pin into an alternated rectilinear motion of the needle. According to the invention, the fast winding movement of the needle is achieved by means of said kinematic system comprising a pin suitably constrained to a needle-carriage. The pin can be operated so as to follow a circular trajectory by rotating around a predefined motor axis. The circular movement of the pin is turned into a vertical alternated motion by means of the kinematics which is configured so that the circular movement of the pin is transformed into a vertical alternated rectilinear movement of the needle-carriage and consequently of the needle itself. Advantageously, the pin engages a buttonhole of the needle-carriage in such a way that during the rotation of the pin, the movement of the pin respect to the carriage, guided by the buttonhole, leads to the desired alternated vertical motion of the carriage.

Additionally, the machine comprises a support for a core intended to receive the winding, such as for example a closed stator. Said support can be operated with intermittent rotations which are synchronised with the vertical-stroke movement of the needle. The combination between the purely vertical movement of the needle and the rotational movements of the support, enables to obtain the desired trajectory of the winding wire.

The kinematic system which generates the vertical movement of the needle is simple, but highly-performing. The movement of the needle can be precisely controlled at high speed. The pin can be mounted on a suitable rotating member, for example on a wheel. Due to its structure, the kinematic system is suitable to reach high speeds. The masses having an alternated movement are reduced compared to the conventional systems. The system is less sensitive to gravity (weight) and it ensures uniform control of the needle during the upward and downward stroke. Owing to the cooperation between the needle having a purely vertical stroke, and the movement of the core induced by the support, the system according to the invention achieves an accurate stratification of the wire.

The position of the mobile support is controlled along the vertical axis (Z axis). In this way it is possible to control the position of the entire winding unit along the Z axis and generate the fast winding movement starting from a desired elevation by means of the described kinematics. In other words, the invention provides two controls along the vertical Z axis: position control, which regulates the position of the entire winding unit, and dedicated control of the fast winding movement according to the described kinematics. The fast winding movement is carried out by keeping the unit stationary at a preselected elevation.

A further aspect of the present invention is a winding method according to the attached claims.

### Preferred embodiments

Preferably, the pin engages the needle-carriage with a constraint so that the pin is forced to slide in a horizontal or substantially horizontal direction respect to the needle carriage.

In a preferred embodiment the pin is allocated inside a buttonhole of said needle-carriage. In this way the pin is forced to slide linearly inside the buttonhole.

The pin may consist of a bearing which can rotate around its own central axis, wherein said central axis of the pin is parallel to said motor axis. In other words, the pin may be made with a bearing mounted in an eccentric position respect to the motor axis.

Advantageously, the pin is in rolling (revolving) engagement with the needle-carriage. The pin may have a contact surface arranged so as to roll on at least one corresponding contact surface of the needle-carriage. For example, the pin may roll on inner surfaces of the aforementioned buttonhole.

The pin may be formed by a roller or a needle bearing which is arranged so as to roll on opposite surfaces of the buttonhole of the needle-carriage.

Advantageously, during operation of the winding needle, the pin has a uniform circular motion provided by the motor shaft.

The pin may be associated with a rotating member of various shapes which acts essentially as a crank of the operating mechanism. In one embodiment the pin is mounted in an eccentric position on a wheel.

The distance of the pin from the motor axis determines the radius of the circular trajectory of the pin and accordingly determines the vertical stroke of the needle-carriage. Said distance is advantageously adjustable. For example, said distance is selectively adjustable between at least two predefined values. Referring for example to the aforementioned embodiment, in which the pin is mounted on a wheel, the wheel may comprise anchoring seats for fixing the pin at a variable distance from the motor axis.

More generally, a rotating member on which the pin is mounted may comprise at least a first seat suitable for mounting the pin at a first distance from the motor axis and a second seat designed to mount the pin at a second distance from the motor axis, whereas the second distance is different from the first distance. Said seats may comprise pin mounting holes.

In some embodiments it is therefore possible, when the machine is at standstill, to disassemble the pin from a first position and reassemble it in a second position at a different position from the motor axis.

The needle-carriage is part of a winding unit which is guided and controlled in position along the vertical axis (axis Z). Therefore, the machine may comprise along the Z axis a "slow" and long-stroke position control for locating the entire unit, and a "fast" control system for the needle winding movement. The winding movement is provided by the kinematic system described above having the pin engaged with the needle-carriage.

The kinematic system is essentially transported by the unit along the Z axis (programmable axis). Consequently, the winding movement of the needle starts from an initial elevation determined by the position of the unit and the stroke is regulated by the kinematic system itself.

A machine according to the invention advantageously comprises a control system which is configured to: position the winding unit at a desired winding elevation;
keeping the unit stably at said winding elevation, managing the winding movement of the needle by operating the motor shaft by means of the kinematic system comprising the pin and the movable carriage engaged with it;
managing the intermittent rotation of the support of the core so that it is synchronised with the rotation of the motor shaft and the pin.

The control system may be configured to perform the following operations during the winding of the wire around a pole of the core:
rotating the core support in one direction when the needle is located close to one end of its vertical stroke so as to align a first side of a pole with the vertical trajectory of the needle;
rotating the core support in the opposite direction when the needle is located close to the opposite end of its vertical stroke so as to align a second side of the pole with the trajectory of the needle.

The control system can also be configured for performing the following task: when the winding around a pole is completed, the support rotates so as to bring an upcoming pole into alignment with the needle working area.

A winding method according to the invention, in particular for winding a closed stator for electric motors, preferably comprises:
winding the conducting wire, so as form coils around the poles of the core, by means of a needle fixed to a needle-carriage having a vertical-stroke;
operating the needle by means of a kinematics comprising a moving pin having a circular trajectory around an axis, wherein said pin is constrained to slide with a rectilinear movement in a non-vertical direction relative to said needle-carriage, the kinematic system being thus configured so as to convert the circular trajectory movement of the pin into an alternated rectilinear vertical motion of the needle-carriage and the needle itself;
during the winding of wire around a pole, positioning the core, having alternated rotational movements synchronised with the vertical stroke movement of the needle, alternately between a first position and a second position during the formation of each wire turn, wherein in the first position a first side of the pole is aligned with the needle stroke and in the second position a second side of the pole is aligned with the needle stroke.

The coil winding method may also comprise the step of: positioning the needle at an initial winding elevation by means of a movable support displaceable along the vertical axis, in a controlled position along said axis; providing an alternating vertical movement to the needle respect to said support, said support being held stably at a preselected elevation during the alternating vertical movement of the needle.

The invention provides a robust, but small and light kinematics which allows a high-speed vertical movement of the needle and reduces the masses having an alternated movement. Consequently, the kinematics of the invention is practically exempt from changes in motion due to the force of gravity. A further advantage consists in the association of the kinematic mechanism with a unit having a programmable vertical position which allows precise positioning of the needle at a desired initial winding point in the centre of the stator. A further advantage of the invention consists in the fact that it may be implemented without requiring the use of sophisticated and expensive electronics.

The advantages of the invention will become even clearer with the aid of the following description referring to a preferred embodiment.

### Brief description of the figures

Fig. 1 shows a front view of needle machine according to an embodiment of the invention.
Fig. 2 is a rear view of the machine of Fig. 1.
Fig. 3 is a detail of Fig. 1.
Fig. 4 is another detail of Fig. 1.
Fig. 5 is a detailed front view of the machine according to Fig. 1 and shows in particular the needle operating mechanism;
Figs. 6. 7 and 8 show three different positions of the needle operating mechanism during operation;
Fig. 9 shows a conceptual diagram of the needle operating mechanism.

### Detailed description

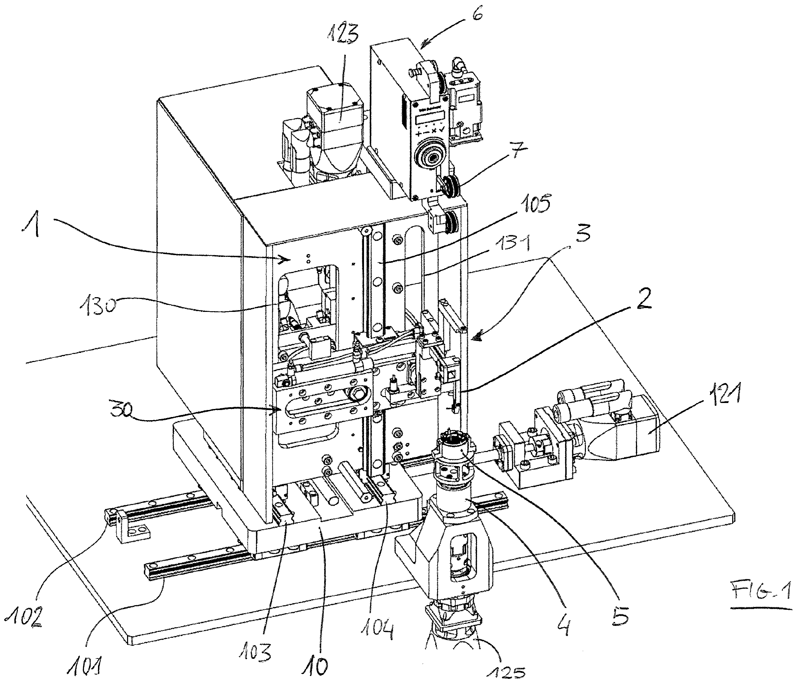

In Fig. 1 the reference number 1 generally indicates a winding head of the winding machine. Said head 1 is mounted on a base 10 which is movable on a pair of guides 101, 102 oriented along a first axis (axis X). The winding head 1 in turn is movable respect to the base 10 on guides 103, 104 directed along a second axis (Y axis).

It can be noted that the figures show a single-head machine, but the invention can be applicable to multiple-head machines.

The machine comprises a winding unit generally indicated by the reference number 3 (Figs. 1-2). Said winding unit 3 is guided vertically (Z axis) along a series of guides which comprise a front guide 105 and two rear guides 106, 107.

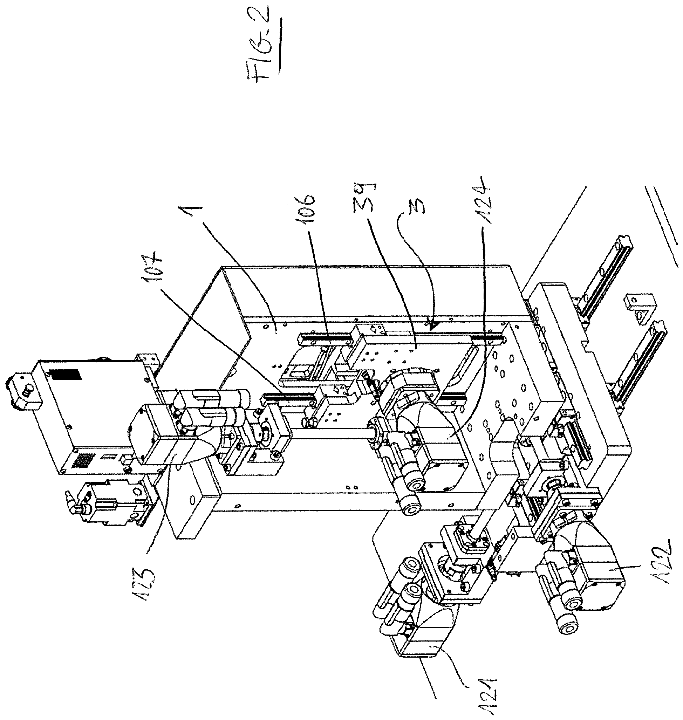

The needle 2 is carried by said winding unit 3 by means of a front carriage 30. It can be noted that the winding unit 3 is guided essentially by the rear guides 106, 107 (Fig. 2), while the front carriage 30 is engaged with the front guide 105. Fig. 2 shows a mounting plate 39 of the winding unit 3, which slides in a guided manner along the guides 106 and 107. Advantageously, a braking system is provided to stably maintain the winding unit 3 at a desired elevation (set by the control system).

The movements along said axes X, Y and Z are motorised and controlled with precision so as to position the needle 2 respect to the core to be wound. By controlling the position of the needle 2 along the three axes it is possible to perform the various winding operations. Figs. 1-2 show the motors 121, 122 and 123 which are designed to control the position respectively along the axes X, Y and Z.

The control along the Z axis involves a collective movement of the unit 3 and the devices associated with it, including the needle 2, and a fast alternated movement of the needle 2 during the actual winding operation, i.e. to wind coils of conducting wire around a pole of the core.

The position control is performed by the motor 123. For this purpose, a wall of the head 1 comprises front buttonholes 130, 131 which allow the displacement of the unit 3 along the axis Z. By means of said position control along the Z axis, optionally combined with X- and Y axis control, accessory operations typical of the coil forming process such as wire positioning, cutting, binding, etc., are for example performed.

The fast winding movement is generated by a further motor 124 mounted on the plates 39 (Fig. 2). The motor 124 drives a kinematics which will be described below and which determines a rapid alternated vertical motion of the carriage 30 and the needle 2.

The fast alternating movement of the needle 2 can be performed respect to the unit 3 while keeping the latter at a pre-set vertical elevation. For this purpose, the unit 3 can be suitably braked.

The machine comprises a support 4 for a core to be wound, for example a stator 5. The support 4 can rotate around a central vertical axis, operated by another motor 125 (Fig. 1).

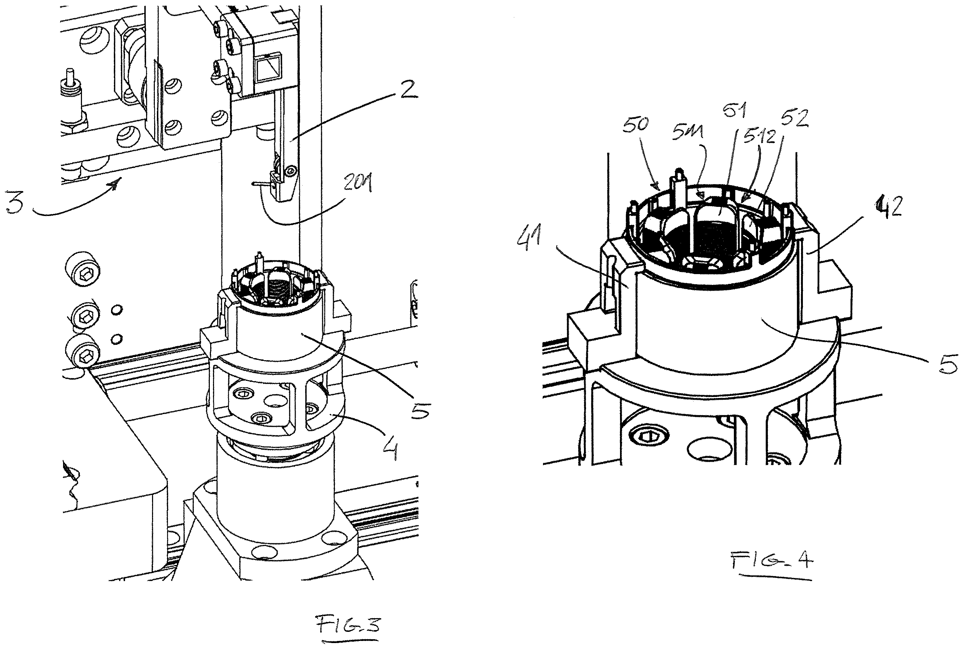

In Figs. 3 and 4 some details of the support 4 of the stator 5 are shown. The stator 5 is essentially held by two blocks or jaws 41, 42 which firmly secure the stator to the support 4.

Fig. 4 shows the typical structure of a closed stator which comprises an outer ring 50 and a series of poles, for example the poles 51 and 52, which extend from the outer ring towards the central axis of the stator. Each pole has two sides on which the conducting wire is deposited so as to form the winding. For example, the sides 511 and 512 of the pole 51 are indicated in Fig. 4.

The needle 2 carries a wire-guiding nozzle 201 which delivers the conducting wire (not shown in the figures). Considering Figs. 3 and 4 it can be understood that, given the closed structure of the stator 5, the needle 2 for winding the conducting wire around said poles must "enter" the stator 5 from above.

The machine comprises a series of devices for maintaining the correct tension of the conducting wire, including for example a tensioning unit 6 and pulleys 7 (Fig. 1) which guide the wire towards the needle 2. These details for guiding and keeping the wire tensioned are known in the field of winding machines.

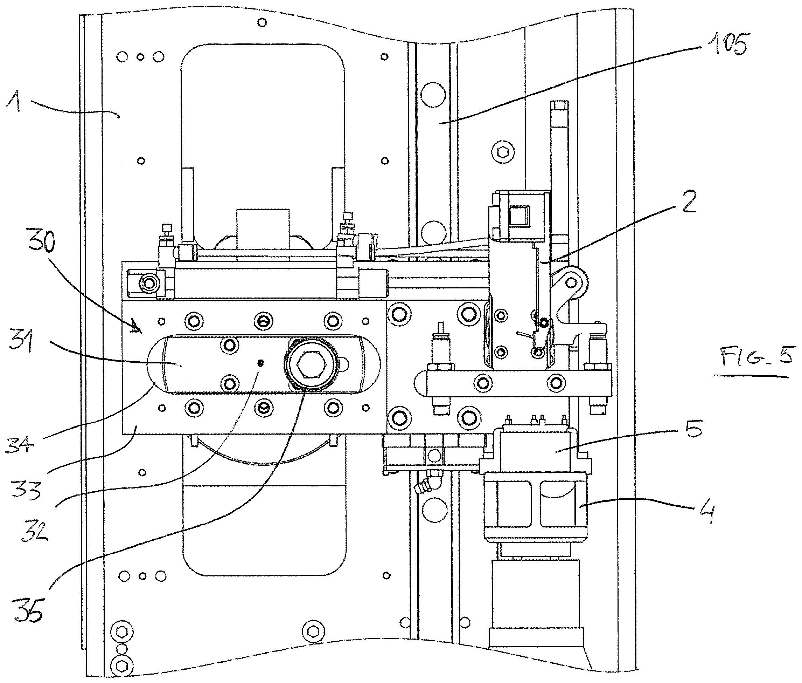

Now the winding engine and the respective kinematics that generate the fast winding movement are described with reference to Fig. 5.

The winding engine essentially comprises the motor 124, the wheel 31 and the carriage 30 which in turn carries the needle 2.

The wheel 31 is driven by the motor 124 rotating around the motor axis 32. Said motor axis 32 is perpendicular to the plane of Fig. 5. For example, the wheel 31 is keyed directly to the motor shaft of the motor 124.

The front carriage 30 comprises a plate 33 which has a horizontal buttonhole 34. Said plate 33 is mounted at the front of the wheel 31.

A pin 35 is mounted on said wheel 31 in an eccentric position spaced from the motor axis 32. The distance of the pin 35 from the motor axis 32 can be adjustable, i.e. the wheel 31 can comprise mounting seats for the pin 35 which define various selective mounting positions, more or less distant from the motor axis 32.

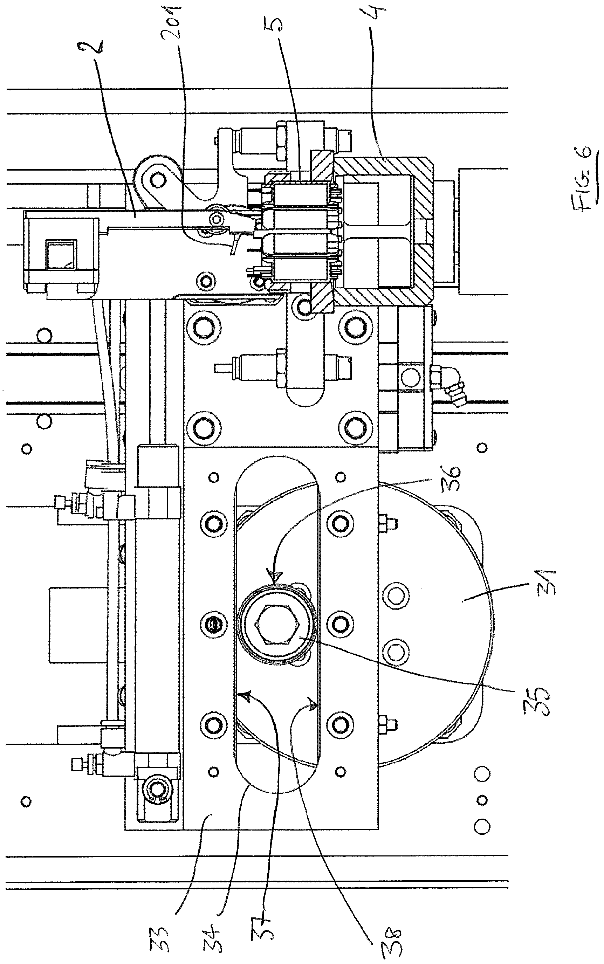

The pin 35 is engaged with said buttonhole 34. In the example, said pin 35 is a rolling bearing which is rotatable respect to the wheel 31 around its axis. In greater detail (Fig. 6) the side surface 36 of the pin-bearing 35 engages with the inner surfaces 37 and 38 of the buttonhole 34 in a rolling (revolving) manner. In summary, the pin 35 rolls inside the buttonhole 34.

As a result of the rotation of the wheel 31 the pin 35 travels, respect to the frame of the head 1, a circular trajectory which is centred on the motor axis 32. Due to the existing constraints, i.e. rolling of the pin inside the horizontal buttonhole 34 and front carriage 30 guided to move vertically along the guide 105, the rotation of the wheel 31 generates a vertical up-and-down movement of the carriage 30. Being associated with the carriage 30, also the needle 2 consequently performs the desired up-and-down vertical stroke movement.

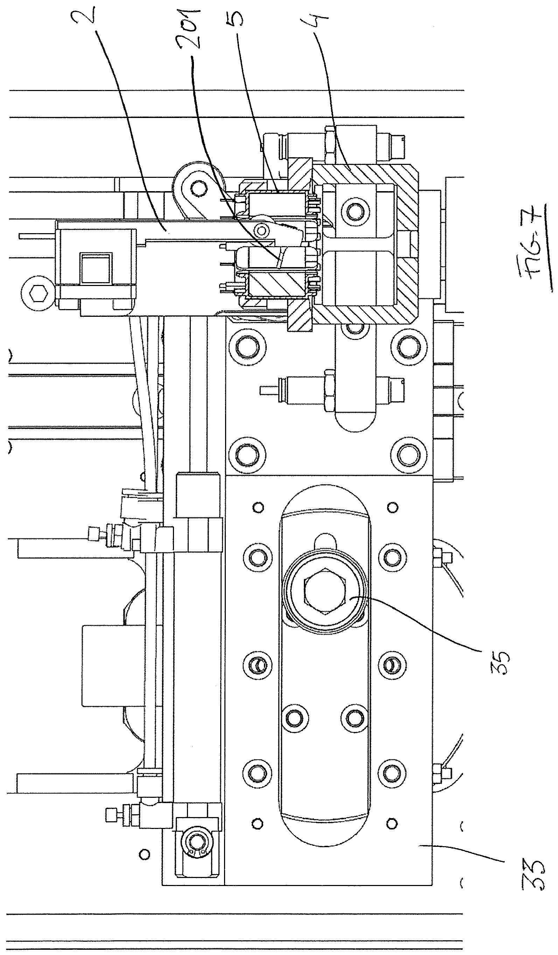

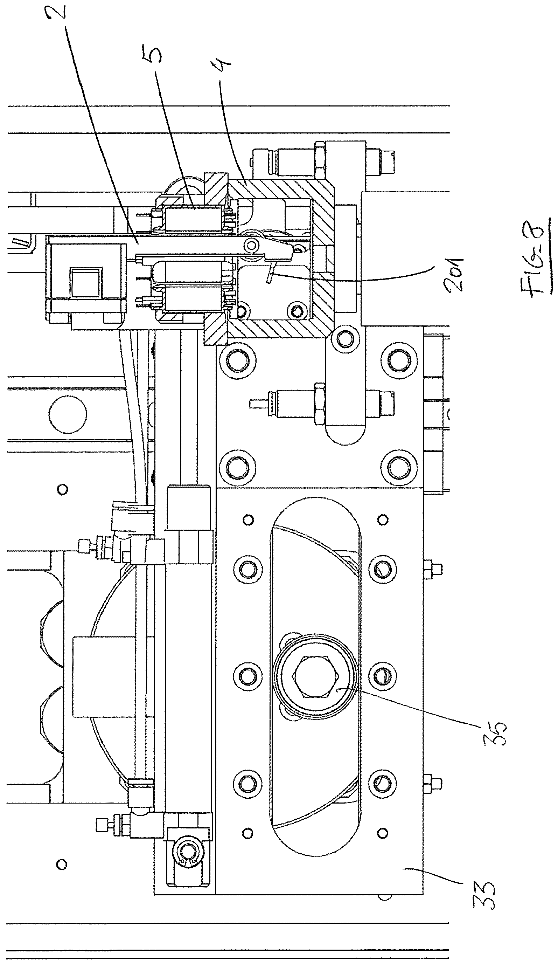

Figs. 6 to 8 show the kinematics respectively in the following positions: needle at the top end-of-stroke position (Fig. 6), needle at half stroke (Fig. 7) and needle at the bottom end-of-stroke position (Fig. 8).

In figures 6 to 8, are also shown the cross-sections of the stator 7 to identify the relative position of the needle and the stator.

In Fig. 6 the needle 2 is located essentially at the top end-of-stroke position wherein the wire-guide nozzle 201 is situated on the outside of the stator 7, more precisely above the stator. In Fig. 7 the needle 2 is located half-stroke and the nozzle 201 inside the stator. In Fig. 8 the needle 2 is essentially at the bottom end-of-stroke position and the nozzle 201 is situated outside the stator, underneath it.

During execution of a winding movement around a pole, the position of the stator 5 is controlled by means of the motor 125 so as to execute rotations coordinated with the movement of the needle 2, so as to align one side of the pole with the trajectory of the needle 2 and the conducting wire. In particular one of the two sides of the pole is aligned with the needle during the downward stroke and the other side is aligned with the needle during the upward stroke.

For example, considering again Fig. 4, during winding of the pole 51, the intermittent rotation of the support and of the stator causes the needle 2 to alternately place the conducting wire on the side 511 and on the side 512. For example, the needle 2 lays the wire on the side 511 during the downward movement and on the side 512 during the upward movement.

The intermittent rotations of the support 4 are performed while the needle 2 is near to an end-of-stroke position, as shown in Fig. 6 or Fig. 8, so as not to interfere with the needle and the nozzle 201. It can be understood at this point that the combination of the movement of the needle 2 and the intermittent rotations of the support 4 produces the desired, essentially elliptical, trajectory for winding the wire.

Additionally, the motor 125 is used to align in each case one of the poles with the working trajectory of the needle. For example, once winding of the pole 51 has been completed, the motor 125 is operated so as to position the next pole 52 in the needle working area.

It should be noted that the kinematics formed by the carriage 30 and the wheel is transported along the Z axis by the main position control by means of the motor 123. The position control system moves the carriage 30 to a predefined elevation, for example at Z = Zo. Starting from said elevation the carriage and the needle perform the winding movement with a stroke determined by the distance of the pin 35 from the motor axis.

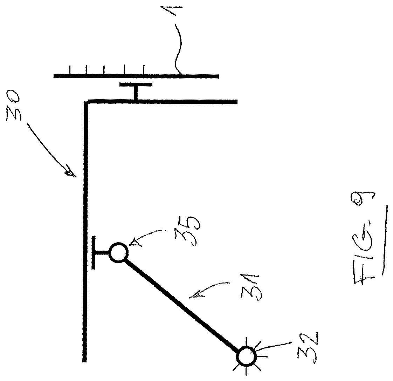

Fig. 9 conceptually illustrates the kinematic system which moves the carriage 30 and the needle 2. The carriage 30 can be schematised as a body constrained to be displaced in the vertical direction respect to the frame of the head 1, through a vertical sliding block represented by the guide 105. The wheel 31 and the pin 35 sliding inside the buttonhole can be schematically represented as a crank associated with the carriage 30 having a carriage constraint.

## Claims

1. Winding machine for winding coils of conducting wire for components of electric motors, the machine being of the type including a needle having a vertical stroke, comprising:
a winding head (1);
a winding group comprising a needle (2) designed to deliver the conducting wire;
said winding group can be positioned at a predetermined vertical elevation relative to the winding head by means of a support of the winding unit, wherein said support is vertically displaceable relative to the winding head; said winding group comprising a winding engine which is configured to give a winding movement to the needle relative to said support of the group, said winding movement being in the form of an alternated vertical movement between a top end-of-stroke elevation and a bottom end-of-stroke elevation;
wherein said winding engine comprises:
a needle-carrying carriage (30) with a vertical stroke;
a pin (35) operable during the winding so as to travel along a circular trajectory around a motor axis (32), said trajectory being comprised in a vertical plane;
wherein said pin (35) is engaged with said carriage forming a kinematic system suitable to convert the motion with circular path of the pin (35) into an alternated rectilinear vertical movement of the carriage (30) and of the needle (2) associated with the carriage.

2. Machine according to claim 1, comprising a support (4) for a core (5) intended to receive the winding, said support for the core being operated during coil winding with intermittent rotations which are synchronised with the needle winding movement.

3. Machine according to claim 1 or 2, wherein the pin (35) is constrained to slide in a horizontal direction relative to the needle-carrying carriage.

4. Machine according to one of the previous claims, wherein the pin is constrained to the needle-carrying carriage, being received in a slot (34) of said needle-carrying carriage.

5. Machine according to one of the previous claims, wherein the pin is in rolling engagement with the needle-carrying carriage.

6. Machine according to claims 4 and 5, wherein the pin consists of a revolving bearing which is arranged to roll over opposite surfaces of the slot of the needle-carrying body.

7. Machine according to any one of the previous claims, wherein the pin and the needle-carrying carriage form a kinematic system having one degree of freedom in which an angular position of the pin, along the circular trajectory, identifies a corresponding position of the needle-carrying carriage along its vertical stroke.

8. Machine according to any one of the preceding claims, wherein the distance of the pin from the motor axis is adjustable and preferably is selectively adjustable between at least two predefined values.

9. Machine according to any one of the preceding claims, wherein the winding engine comprises: an electric motor (124), a rotating member (31) set into rotation by said electric motor, said pin (35) being associated with said rotating member (31) in an eccentric position.

10. Machine according to any one of the previous claims, comprising a control system which is configured for:
positioning the winding unit at a desired winding elevation;
keeping the unit stably at said winding elevation, governing the winding movement of the needle by operating the motor shaft, by means of the kinematic system comprising the pin and the movable carriage engaged with said pin;
governing the intermittent rotation of the support of the core so that it is synchronised with the rotation of the motor shaft and the pin.

11. Machine according to claim 10, wherein the control system is configured to cause intermittent rotations in an alternated direction of the support of the core during the winding of the wire around a pole of the core.

12. Method for needle winding a core comprising a plurality of poles, wherein the method comprises:
positioning a winding unit, comprising a needle delivering conducting wire, at a predetermined elevation to start winding by means of a support controlled in position along the vertical axis;
winding the wire, so as to form coils around the poles of the core, by means of a needle associated with a vertical-stroke needle-carrying carriage, while keeping the winding unit at said predetermined elevation;
operating the winding needle by means of a kinematic system comprising a moving pin having a circular trajectory around a motor axis, wherein said pin is constrained to slide with a rectilinear motion in a non-vertical direction relative to said needle-carrying carriage, the kinematic system being configured to convert the circular trajectory movement of the pin into an alternated rectilinear vertical movement of the needle-carrying carriage and of needle itself;
controlling the position of the core with intermittent rotations synchronised with the vertical-stroke movement of the needle to align a desired side of a pole with the trajectory of the needle during the winding steps.

13. Method according to claim 12, wherein the step of controlling the position of the core comprises:
winding of wire around a pole, while rotating the core alternately between a first position and a second position during the formation of each wire loop, wherein in the first position a first side of the pole is aligned with the needle stroke and in the second position a second side of the pole is aligned with the needle stroke, wherein the rotations of the core are performed respectively when the needle is located above or below the pole.

14. Method according to claim 12 or 13, wherein said core is a stator for electric motors of the closed type having poles which extend from a peripheral rim towards the axis.
